Europäisches Patentamt

European Patent Office

Office européen des brevets

(11) Numéro de publication: **0 061 956**
**B1**

## (12) FASCICULE DE BREVET EUROPEEN

(45) Date de publication du fascicule du brevet:
23.10.85

(51) Int. Cl.⁴: **G 01 N 27/90**

(21) Numéro de dépôt: **82400471.7**

(22) Date de dépôt: **15.03.82**

(54) Procédé de contrôle non destructif par courants de Foucault avec correction des effets d'entrefer et dispositif de mise en oeuvre.

(30) Priorité: 23.03.81 FR 8105753

(43) Date de publication de la demande:
06.10.82 Bulletin 82/40

(45) Mention de la délivrance du brevet:
23.10.85 Bulletin 85/43

(84) Etats contractants désignés:
BE DE GB IT NL SE

(56) Documents cités:
EP - A - 0 012 665
EP - A - 0 015 822
FR - A - 1 308 785
FR - A - 2 065 234
FR - A - 2 276 588
FR - A - 2 339 170
US - A - 2 985 824

(73) Titulaire: **COMMISSARIAT A L'ENERGIE ATOMIQUE**
**Etablissement de Caractère Scientifique Technique et**
**Industriel, 31/33, rue de la Fédération, F-75015 Paris (FR)**

(72) Inventeur: **David, Bernard, 3, Résidence du Château de**
**Courcelles, F-91190 Gif-Sur-Yvette (FR)**
Inventeur: **Pigeon, Michel, 14, Avenue du Maréchal Foch,**
**F-91440 Bures Sur Yvette (FR)**

(74) Mandataire: **Mongrédien, André et al, c/o**
**BREVATOME 25, rue de Ponthieu, F-75008 Paris (FR)**

## Description

La présente invention a pour objet un procédé de contrôle non destructif par courants de Foucault avec correction des effets d'entrefer et un dispositif de mise en œuvre de ce procédé. Elle trouve une application dans le contrôle de pièces métalliques, notamment de tubes, de plaques, etc.

Le contrôle par courants de Foucault consiste en l'étude des variations des courants induits dans une pièce métallique par le champ magnétique d'une bobine parcourue par un courant d'excitation alternatif. Ces courants produisent, à leur tour, un champ magnétique qui s'oppose au champ inducteur, ce qui modifie l'impédance de la bobine d'excitation. Cette bobine est disposée dans une sonde qui est déplacée le long de la pièce à contrôler. Tout défaut de celle-ci (changement de dimension, variation de conductivité électrique, criques, etc. modifie le parcours ou l'intensité des courants de Foucault et, corrélativement, l'impédance de la bobine.

La sonde est généralement constituée par deux bobines voisines, alimentées en opposition et placées dans les deux branches adjacentes d'un pont de mesure. Le passage d'un défaut dans le champ de la sonde déséquilibre deux fois le pont, d'abord dans un sens puis dans l'autre. La tension délivrée par la sonde est analysée et représentée sur l'écran d'un tube cathodique par sa composante résistive X (ou réelle) qui est la composante en phase avec le courant d'excitation, et sa composante réactive Y (ou imaginaire) qui est la composante en quadrature de phase avec le courant d'excitation. La tension complexe dèlivrée par la sonde est ainsi représentée par un point de coordonnées X, Y. Lorsqu'un défaut passe dans le champ de la sonde, le point représentatif trace une courbe à deux lobes en forme de huit. Chaque défaut peut être alors identifié à partir de la phase des lobes (inclinaison par rapport à un axe de référence) et de leur amplitude. Une telle méthode est décrite dans les documents EP-A-12 665 et EP-A-15 822.

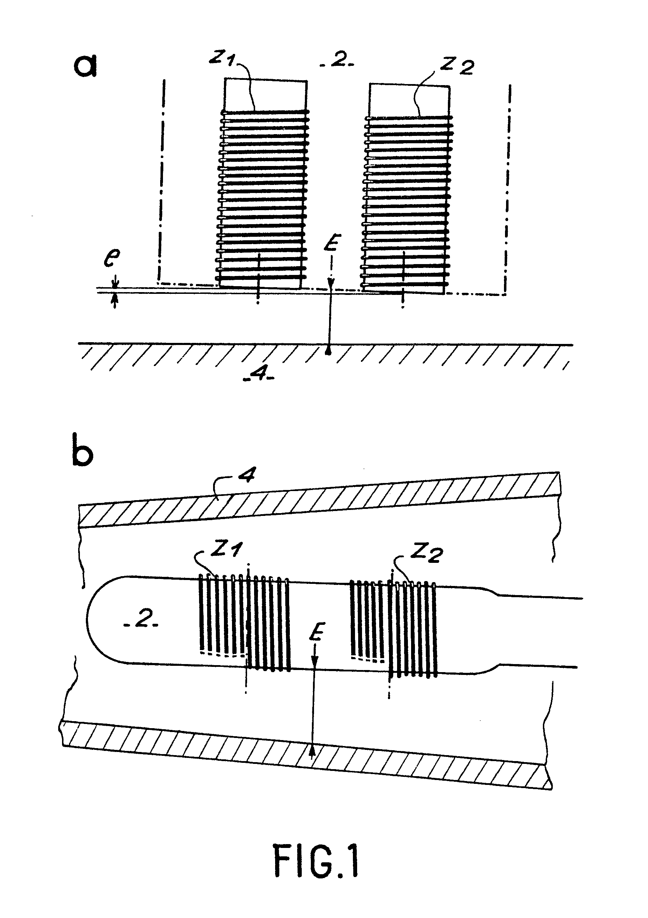

Pour obtenir une bonne précision dans la localisation des défauts on est amené à utiliser des sondes de très petites dimensions. Mais on se heurte vite à un problème qui est celui des variations d'entrefer. Pour mieux comprendre ce problème qui est à la base de l'invention, cette question va d'abord être précisée en liaison avec la figure 1.

Sur cette figure sont illustrés deux types de sonde couramment employés dans la technique de contrôle par courants de Foucault. Ces sondes comprennent essentiellement un corps 2 muni de deux enroulements $Z_1$ et $Z_2$. Elles se déplacent devant ou dans la pièce 4 à contrôler. L'entrefer est constitué par l'espace séparant la sonde de la pièce à contrôler. Il est noté E sur la figure 1.

Il s'agit en fait d'un entrefer moyen car la sonde n'est pas nécessairement rigoureusement parallèle à la pièce à contrôler. Il peut donc exister un entrefer »différentiel« noté »e«, qui représente la différence des entrefers propres à chacun des enroulements. Mais on ne se préoccupera pas, dans la suite de cet entrefer différentiel, dont les effets peuvent être corrigés par filtrage. L'essentiel de l'invention portera sur la correction des effets de l'entrefer E, commun aux deux enroulements.

Si cet entrefer était constant durant toute la mesure, il ne se traduirait que par un affaiblissement du signal que l'on pourrait compenser par une amplification des signaux détectés. En réalité, du fait de la progression de la sonde le long de la pièce, cet entrefer varie constamment. Il en résulte une modification permanente et imprévisible du signal de mesure. En effet, l'intensité de ce signal dépend non seulement du défaut détecté, mais également de la distance de la sonde à la pièce à contrôler. Ceci est dû au fait que l'intensité des courants induits dans une zone de la pièce à contrôler dépend de l'induction magnétique créée en cette zone, et que celle-ci décroît lorsque la distance aux enroulements inducteurs augmente. De même, l'action des courants de Foucault sur les enroulements dépend elle aussi de cette distance.

Si l'on veut corriger les effets des variations d'entrefer sur le résultat de la mesure, il faut relever à tout instant la valeur de l'entrefer. On conçoit qu'un tel procédé, s'il vient naturellement à l'esprit, soit de mise en œuvre très délicate, car il nécessite non seulement des moyens de mesure de l'entrefer, mais aussi des circuits de correction basés sur une loi qui est, par nature, très complexe.

On s'est déjà préoccupé, dans le passé, de ce problème. Dans le document FR-A-2 065 234 par exemple il est décrit un dispositif de contrôle par courants de Foucault où il est prévu une disposition particulière qui permet de s'affranchir des variations de l'angle des sondes par rapport à la surface de la pièce à contrôler. L'appareil comprend alors un inverseur, un potentiomètre et un sommateur, la tension apparaissant sur la borne de sortie de se dernier étant pratiquement insensible à ces variations angulaires.

Dans le document FR-A-2 276 588, il est décrit un appareil de détection de défauts de surface dans des objets métalliques dans lequel il est prévu un traitement de l'information liée à la fréquence d'un oscillateur et, notamment, la formation d'un signal proportionnel à cette fréquence. Ce signal définit un signal de correction fonction de l'entrefer.

Enfin, dans le document US-A-2 985 824, il est décrit un appareil de contrôle non destructif par courants de Foucault dans lequel le signal de mesure prélevé aux bornes d'un pont de mesure est traité par un circuit de correction comprenant un amplificateur et une cellule de déphasage. Ce circuit est conçu pour qu'une correction soit effectuée sur le signal d'entrée selon une caractéristique prédéterminée de telle sorte que le signal de sortie soit corrigé des variations dues aux modifications d'entrefer.

Toutes ces techniques sont complexes et le but de la présente invention est de proposer un procédé et un dispositif de correction qui sont d'une grande simplicité.

A cette fin, l'invention propose de corriger une mesure différentielle à partir du résultat obtenu par une mesure absolue. Cette correction s'obtient simplement en divisant le résultat de la mesure différentielle par celui de la mesure absolue. On obtient alors, de façon surprenante, un résultat qui est sensiblement indépendant de l'entrefer.

La simplicité d'un tel procédé est manifeste puisqu'il repose uniquement sur un traitement des signaux délivrés par la sonde, sans qu'il nécessite la détermination explicite de l'entrefer ni l'élaboration d'un signal de correction fonction de cet entrefer. En d'autres termes, le demandeur a trouvé que le signal absolu synthétisait en quelque sorte les effets d'entrefer et que ce signal pouvait constituer à lui seul un moyen de correction.

Le procédé de l'invention implique qu'on puisse effectuer simultanément une mesure différentielle et une mesure absolue avec une même sonde. Si les deux enroulements d'une sonde sont sensibles aux défauts de la pièce à contrôler, c'est-à-dire si leur impédance varie en présence de la pièce à contrôler, le pont permet d'effectuer une mesure différentielle. Si un seul des enroulements est sensible aux défauts de la pièce à contrôler, le pont permet d'effectuer une mesure absolue. Certains ponts sont doubles, en ce sens qu'ils comprennent à la fois un pont de mesure différentielle et un pont de mesure absolue, ces deuc ponts ayant en commun un des enroulements sensibles aux défauts de la pièce à contrôler. Un tel pont est décrit par exemple dans le document FR-A-2 339 170. Un pont de ce type convient donc bien pour mettre en œuvre l'invention. Mais on peut imaginer aussi une sonde qui comprendrait un pont de mesure différentielle à deux enroulements sensibles à la pièce à contrôler et un enroulement particulier sensible à la pièce à contrôler, ce dernier enroulement fournissant le signal absolu.

De façon plus précise, l'invention a pour objet un procédé de contrôle non destructif d'une pièce métallique par courants de Foucault, dans lequel on utilise une sonde permettant simultanément une mesure différentielle et une mesure absolue, cette sonde comportant, pour la mesure différentielle, deux enroulements ayant une impédance qui varie en présence de la pièce à contrôler et appartenant à un pont mesure différentielle et, pour la mesure absolue, un enroulement ayant une impédance qui varie en présence de la pièce à contrôler, on alimente cette sonde pour un courant d'excitation de fréquence déterminée, on analyse à cette fréquence la tension prélevée sur le pont de mesure différentielle et la tension prélevée sur l'enroulement de mesure absolue, ce procédé étant caractérisé en ce que, pour corriger les effets de l'entrefer qui sépare la sonde de la pièce à contrôler, on divise le résultat de la mesure différentielle par celui de la mesure absolue pour obtenir une mesure différentielle corrigée des effets d'entrefer.

L'enroulement utilisé pour la mesure absolue est avantageusement l'un des deux enroulements utilisés pour la mesure différentielle.

L'invention a également pour objet un dispositif de contrôle non destructif d'une pièce métallique par courants de Foucault, pour la mise en œuvre du procédé qui vient d'être défini, ce dispositif comprenant une sonde permettant simultanément une mesure différentielle et une mesure absolue, cette sonde comportant, pour la mesure différentielle, deux enroulements ayant une impédance qui varie en présence de la pièce à contrôler et appartenant à un pont de mesure différentielle et, pour la mesure absolue, un enroulement ayant une impédance qui varie en présence de la pièce à contrôler, le dispositif comportant en outre une source d'alimentation de la sonde en tension à une fréquence déterminée, une voie d'analyse différentielle alimentée par le pont de mesure différentielle et une voie d'analyse absolue alimentée par l'enroulement de mesure absolue, ces voies d'analyse travaillant à ladite fréquence de la tension d'alimentation, ce dispositif étant caractérisé en ce qu'il comprend en outre, pour corriger les effets de l'entrefer qui sépare la sonde de la pièce métallique à contrôler, un circuit diviseur compartant d'une part, deux entrées, la première, de dividende, reliée à la sortie de la voie d'analyse différentielle la seconde, de diviseur, reliée à la sortie de la voie d'analyse absolue et d'autre part, une sortie qui délivre un signal représentant le quotient des signaux délivrés sur lesdites première et seconde entrées et constituant le signal de mesure différentielle corrigé des effets d'entrefer.

L'invention sera mieux comprise après la description qui suit, d'exemples de réalisation donnés à titre explicatif. Cette description se réfère à des dessins annexés qui font suite à ceux de la figure 1 déjà décrite et sur lesquels:

— la figure 2 est un schéma synoptique d'un dispositif conforme à l'invention,

— la figure 3 illustre un double pont de mesure, différentiel et absolu, de type connu et utilisable dans l'invention,

— la figure 4 illustre un mode particulier de réalisation d'une sonde utilisable dans l'invention,

— la figure 5 est un schéma d'une voie de mesure différentielle et/ou absolue,

— la figure 6 est un schéma d'un mode de réalisation simplifié d'une voie de mesure absolue,

— la figure 7 illustre quelques circuits supplémentaires facilitant la mise en œuvre du dispositif,

— la figure 8 est un relevé expérimental montrant respectivement des signaux de mesure différentielle et de mesure absolue ainsi qu'un signal de mesure différentielle corrigé selon l'invention.

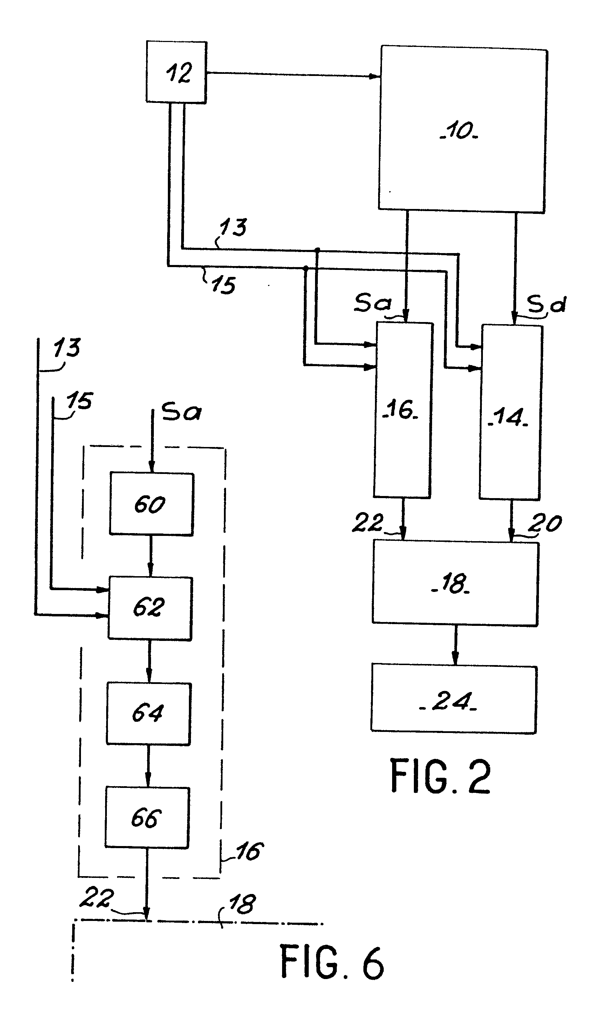

Le dispositif représenté sur la figure 2 comprend:
— une sonde de mesure 10, par exemple du type à double pont de mesure, à deux sorties, l'une différentielle Sd et l'autre absolue Sa,
— un oscillateur 12 d'alimentation de cette sonde à une fréquence déterminée,
— une voie d'analyse différentielle 14,
— une voie d'analyse absolue 16,
— un circuit diviseur 18 à deux entrées, l'une 20 où est appliqué le signal dividende, en l'occurrence le signal de mesure différentielle, et l'autre 22 où est appliqué le signal diviseur, ici le signal de mesure absolue,
— un organe 24 d'enregistrement ou de visualisation du signal délivré par le diviseur 18.

Le fonctionnement de ce dispositif résulte de ce qui a été exposé plus haut. La sonde 10 délivre deux signaux: l'un provenant d'un pont de mesure différentielle et l'autre d'un pont de mesure absolue. Les voies 14 et 16 effectuent l'analyse de ces signaux. Elles mesurent donc la composante de ces signaux en phase avec le courant d'excitation de la sonde et la composante en quadrature de phase avec ce même courant. Pour cela, ces voies 14 et 16 reçoivent de l'oscillateur 12, par deux connexions 13 et 15, des courants respectivement en phase et en quadrature de phase avec le courant d'excitation appliqué à la sonde 10. Le résultat de la mesure différentielle est ensuite divisé par celui de la mesure absolue dans le diviseur 18. La mesure différentielle ainsi corrigée est alors sensiblement indépendante de l'entrefer séparant la sonde de la pièce à contrôler.

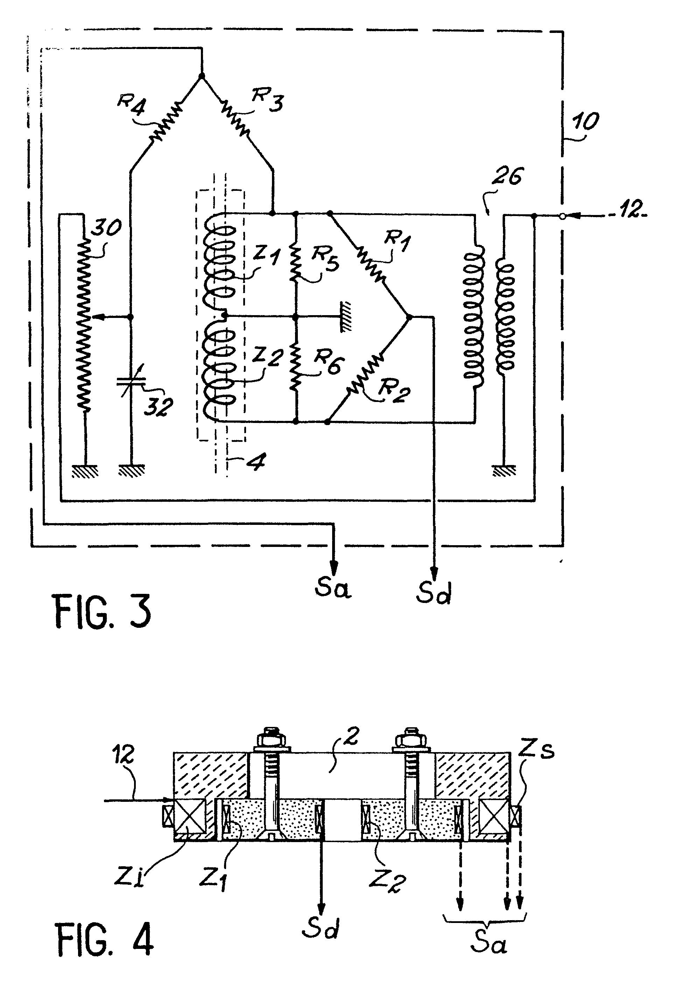

Les figures 3 à 6 illustrent quelques exemples de réalisation de moyens pouvant être utilisés pour constituer la sonde 10 et les voies 14 et 16. Ces moyens sont connus si on les considère isolément.

La figure 3 représente un pont double comprenant à la fois un pont de mesure absolue et un pont de mesure différentielle. Le pont de mesure différentielle est constitué par deux résistances $R_1$ et $R_2$ et deux enroulements $Z_1$ et $Z_2$ traversés par la pièce 4 à contrôler.

Selon un mode de réalisation perfectionné, des résistances supplémentaires $R_5$ et $R_6$ peuvent être connectées en parallèle sur les deux enroulements $Z_1$ et $Z_2$. La sortie permettant d'effectuer la mesure différentielle est désignée par Sd. L'alimentation du pont s'effectue par le secondaire d'un transformateur 26 dont le primaire reçoit un courant d'excitation issu de l'oscillateur 12.

La partie correspondant au pont de mesure absolue est constituée par deux résistances $R_3$ et $R_4$, par l'enroulement $Z_1$ (et sa résistance associée $R_5$) et par un circuit qui permet de compenser la tension d'excitation. Ce circuit comprend un potentiomètre 30 auquel est appliquée la tension d'alimentation provenant du primaire du transformateur 26 et un condensateur variable 32. La prise du signal absolu Sa s'effectue entre les résistances $R_3$ et $R_4$. Le réglage du potentiomètre 30 et du condensateur 32 permet d'obtenir, à vide, l'équilibrage du pont absolu afin que la tension apparaissant sur la connexion de sortie absolue Sa soit débarrassée du signal d'excitation.

Naturellement, d'autres types de sondes peuvent être utilisés. On peut par exemple adjoindre à un pont différentiel un enroulement particulier supplémentaire destiné à fournir le signal absolu nécessaire à la correction. On peut aussi utiliser une sonde à un enroulement inducteur et deux enroulements récepteurs, comme illustré sur la figure 4. Sur cette figure un enroulement inducteur Zi est alimenté par la source 12; deux enroulements récepteurs $Z_1$ et $Z_2$ branchés en opposition sont disposés à l'intérieur de l'enroulement Zi. Cette sonde ne comporte pas de noyaux magnétiques. Les différents enroulements sont bobinés sur des mandrins en résine tenant à haute température (250° C). Le signal différentiel Sd est prélevé entre les bobines $Z_1$ et $Z_2$ et le signal absolu Sa est prélevé soit aux bornes de l'enroulement inducteur Zi, soit aux bornes de l'un des enroulements récepteurs $Z_1$ ou $Z_2$, soit encore aux bornes d'un enroulement supplémentaire Zs bobiné autor de l'enroulement inducteur.

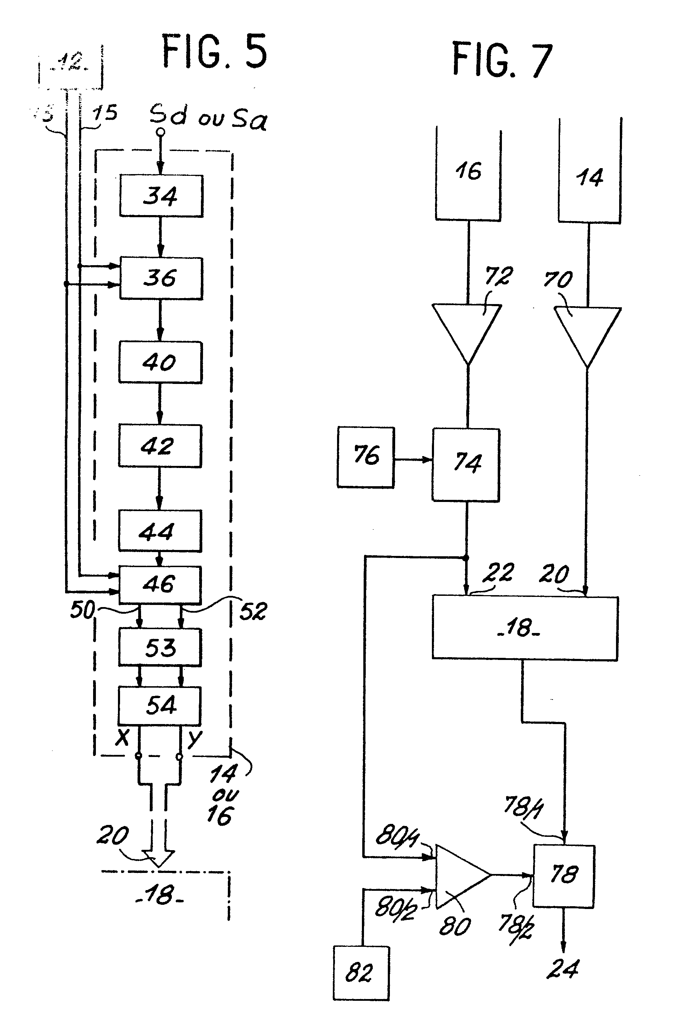

Le circuit représenté sur la figure 5 représente soit une voie 14 de mesure du signal différentiel apparaissant sur la sortie Sd de la sonde, soit une voie 16 de mesure du signal absolu apparaissant sur la sortie Sa, encore que cette dernière voie puisse être simplifiée comme il sera expliqué à propos de la figure suivante.

Sur la figure 5, le circuit représenté comprend tout d'abord un circuit préamplificateur 34, par exemple de gain 30 décibels, destiné à donner au signal de mesure un niveau suffisant pour que puissent s'effectuer des opérations d'équilibrage. Celles-ci consistent à compenser le déséquilibre de construction de la sonde et elles s'effectuent dans un circuit 36. Ce dernier est relié à l'oscillateur 12 par des connexions 13 et 15 qui véhiculent des signaux respectivement en phase et en quadrature de phase avec le courant d'excitation de la sonde. Le signal de mesure après équilibrage est amplifié dans un circuit amplificateur 40, par exemple de gain 60 décibels, cette amplification étant telle que le signal ne subisse aucune saturation. Le signal délivré par l'amplificateur 40 est ensuite filtré au moyen d'un filtre passe-bande 42, centré sur la fréquence d'excitation. Ce filtre est avantageusement à forte pente, par exemple de 24 décibels par octave. Le signal filtré est appliqué à un circuit amplificateur 44, puis analysé par un circuit échantillonneur à mémoire 46 ou par tout autre système de démodulation (multiplieur, détecteur synchrone, etc.). Ce circuit reçoit, par les connexions 13 et 15, deux signaux de référence en phase et en quadrature de phase avec le courant d'excitation de la sonde. Cet échantillonneur à mémoire délivre, sur deux connexions de sortie 50, 52 la partie en phase X et la partie en quadrature de phase Y avec le courant d'excitation. Cet échantillonneur peut être éventuellement suivi d'un déphaseur 53 qui permet de faire tourner le plan XY obtenu, d'un angle compris entre 0 et 360°, ce déphaseur étant lui-même suivi d'un filtre passe-bande 54 qui permet d'éliminer le bruit de fond résiduel dû à l'échantillonnage ou de supprimer l'effet d'entrefer différentiel.

La voie représentée délivre donc, en définitive, les parties résistive X et réactive Y du signal (différentiel ou absolu). Ces signaux X et Y sont des tensions continues, lentement variables avec le déplacement de la sonde.

Il va de soi ce circuit n'est donné qu'à titre explicatif et que tout autre moyen permettant de déterminer les parties résistive et réactive du signal peut être utilisé dans l'invention.

Si l'on utilise, comme circuit d'analyse du signal absolu, une voie comme celle de la figure 5, on dispose alors des deux composantes X et Y de ce signal, et l'on peut utiliser, pour effectuer la correction soit l'une, soit l'autre de ces composantes, soit les deux, soit encore le module $\sqrt{X^2+Y^2}$.

La composante X est particulièrement utile car elle diminue lorsque l'entrefer augmente, et constitue donc un paramètre diviseur intéressant. Par ailleurs, une rotation de phase obtenue par le déphaseur 53 permet d'obtenir une sensibilité maximale pour la composante X.

Mais, pour traiter le signal absolu, on peut également utiliser une voie simplifiée comme celle qui est représentée sur la figure 6. Cette voie ne fournit pas séparément les composantes X et Y mais seulement le module du signal. La voie représentée comprend un amplificateur 60, un circuit d'équilibrage 62, un circuit de détection d'amplitude 64 et un filtre passe-bande 66.

Cependant, dans le cas de l'utilisation du module extrait d'une voie simplifiée, une précaution doit être prise. En effet, si l'on effectuait l'opération d'équilibrage lorsque le capteur est à proximité de la pièce, le module du signal de mesure présenterait une valeur importante lorsque l'entrefer est grand et une valeur faible lorsque l'entrefer est petit. Un tel signal ne pourrait donc pas constituer un diviseur correct puisqu'il ne varie pas dans le bon sens. On réalisera donc l'opération d'équilibrage lorsque le capteur est loin de la surface examinée. Dans cette situation, à partir des composantes du signal d'excitation véhiculées par les connexions 13 et 15, on oppose aux composantes du signal de mesure absolu des composantes telles que le module du signal équilibré soit nul. Dès lors, lorsque la sonde se rapprochera de la pièce à contrôler, le module délivré par le circuit 64 augmentera et ce module pourra constituer un diviseur.

Pour faciliter la mise en œuvre du procédé de l'invention, quelques circuits annexes peuvent être utilisés, comme il est illustré sur la figure 7. Le signal délivré par la voie différentielle peut faire l'objet d'une amplification par un circuit 70, de gain 20 dB par exemple. Quant au signal absolu il peut tout d'abord transiter par un amplificateur 72 de gain unité assurant une adaptation des impédances, puis faire l'objet d'un réglage de zéro à l'aide d'un additionneur 74 alimenté par une source de tension réglable 76. La sonde étant éloignée de toute pièce métallique, on règle la source 76 jusqu'à obtenir, en sortie du circuit 74, un signal nul servant d'origine. De plus, il faut éviter que le signal absolu, par lequel on divise le signal différentiel, devienne nul, auquel cas le signal corrigé délivré par le diviseur 18 deviendrait infini. Ainsi à la sortie du diviseur 18 peut être disposé un relais de protection 78 dont une entrée de signal 78/1 reçoit le signal différentiel corrigé et une entrée de commande 78/2 reçoit une tension délivrée par un comparateur 80. Ce dernier possède deux entrées, 80/1 et 80/2, la première recevant le signal délivré par l'additionneur 74 et la seconde recevant un signal délivré par une source réglable 82. Lorsque le signal absolu appliqué à l'entrée 22 du diviseur tombe à une valeur inférieure au seuil fixé par la source 82, le comparateur 80 délivre une tension apte à ouvrir le relais 78. On évite ainsi la saturation de l'enregistreur 24 qui suit et l'on interdit tout enregistrement lorsque l'entrefer dépasse une certaine valeur et que le rapport signal sur bruit devient trop faible. En général, le seuil est réglé entre le tiers et la moitié du signal absolu correspondant au contact sonde-pièce (entrefer nul ou quasi-nul).

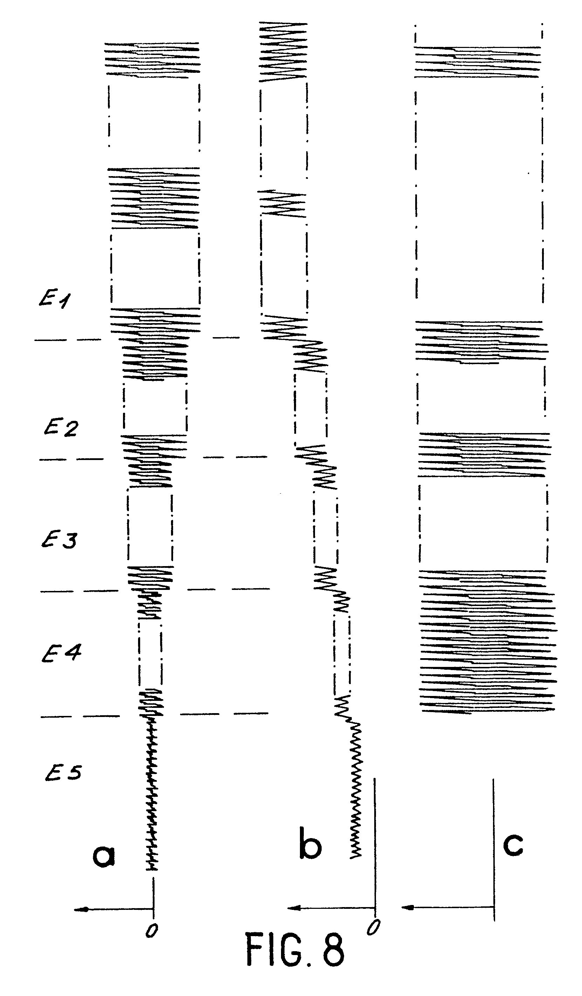

Les courbes de la figure 8 montrent un exemple de résultats obtenus grâce à l'invention. Les mesures sont effectuées pour des valeurs d'entrefer croissantes $E_1$, $E_2$, ..., $E_5$, en faisant tourner une pièce métallique à proximité d'une sonde. Le diagramme (a) figurant à gauche représente un signal différentiel non corrigé. Le diagramme (b), figurant au milieu, représente le signal absolu correspondant. On constate, sur ces deux diagrammes, une diminution de la sensibilité de la mesure lorsque l'entrefer augmente. Le diagramme (c), qui figure à droite, représente le signal différentiel corrigé selon l'invention, c'est-à-dire obtenu en divisant le signal différentiel (a) par le signal absolu (b). On constate bien que le signal ainsi corrigé est d'intensité sensiblement constante, quelle que soit la valeur de l'entrefer entre $E_1$ et $E_4$. Pour la valeur $E_5$ le signal corrigé est interrompu car le signal absolu devient trop faible et le relais 78 de la figure 7 s'ouvre, indiquant que la qualité de la mesure n'est plus suffisante.

L'invention qui vient d'être décrite peut être appliquée quelle que soit la surface examinée plane ou gauche soit en haute fréquence (de 1 kHz à 1 MHz) par exemple pour la détection de défauts longitudinaux ou transversaux, à l'extérieur ou à l'intérieur de tubes ou d'alésages cylindriques ou coniques, soit en basse fréquence (quelques Hz à quelques kHz) par exemple pour le contrôle de joints ou de soudures, ainsi que pour la détection de défaut sous un revêtement.

## Revendications

1. Procédé de contrôle non destructif d'une pièce métallique par courants de Foucault, dans lequel on utilise une sonde permettant simultanément une mesure différentielle et une mesure absolue, cette sonde comportant, pour la mesure différentielle, deux enroulements ayant une impédance qui varie en présence de la pièce à contrôler et appartenant à un pont de mesure différentielle, et, pour la mesure absolue, un enroulement ayant une impédance qui varie en présence de la pièce à contrôler, on alimente cette sonde par un courant d'excitation de fréquence déterminée, on analyse à cette fréquence la tension prélevée sur le pont de mesure différentielle et la tension prélevée sur l'enroulement de mesure absolue, ce procédé étant caractérisé en ce que, pour corriger les effets de l'entrefer qui sépare la sonde de la pièce à contrôler, on divise le résultat de la mesure différentielle par celui de la mesure absolue pour obtenir une mesure différentielle corrigée des effets d'entrefer.

2. Procédé selon la revendication 1, caractérisé en ce que le signal absolu utilisé pour diviser le résultat de la mesure différentielle est constitué par l'une quelconque des deux composantes de la tension prélevée sur l'enroulement de mesure absolue en phase ou en quadrature de phase par rapport au courant d'excitation ou par le module dudit signal absolu, ou par l'une et l'autre des deux dites composantes.

3. Dispositif de contrôle non destructif d'une pièce métallique par courants de Foucault, pour la mise en œuvre du procédé de la revendication 1, ce dispositif comprenant une sonde (10) permettant simultanément une mesure différentielle et une mesure absolue, cette sonde comportant, pour la mesure différentielle, deux enroulements (Z1, Z2) ayant une impédance qui varie en présence de la pièce à contrôler et appartenant à un pont de mesure différentielle (Z1, Z2, R1, R2) et, pour la mesure absolue, un enroulement ayant une impédance qui varie en présence de la pièce à contrôler, le dispositif comportant en outre une source d'alimentation (12) de la sonde en tension à une fréquence déterminée, une voie d'analyse différentielle (14) alimentée par le pont de mesure différentielle et une voie d'analyse absolue (16) alimentée par l'enroulement de mesure absolue, ces voies d'analyse travaillant à ladite fréquence de la tension d'alimentation, ce dispositif étant caractérisé en ce qu'il comprend en outre, pour corriger les effets de l'entrefer qui sépare la sonde de la pièce métallique à contrôler, un circuit diviseur (18) comportant d'une part, deux entrées, la première (20), de dividende, reliée à la sortie de la voie d'analyse différentielle (14), la seconde (22), de diviseur, reliée à la sortie de la voie d'analyse absolue (16) et, d'autre part, une sortie qui délivre un signal représentant le quotient des signaux délivrés sur lesdites première (20) et seconde (22) entrées et constituant le signal de mesure différentielle corrigé des effets d'entrefer.

4. Dispositif selon la revendication 3, caractérisé en ce que l'enroulement de mesure absolue est constitué par l'un des enroulements (Z1) du pont de mesure différentielle.

5. Dispositif selon la revendication 3, caractérisé en ce que l'enroulement de mesure absolue est constitué par un enroulement supplémentaire.

6. Dispositif selon la revendication 3, caractérisé en ce que la sonde comprend un enroulement inducteur (Zi) et deux enroulements récepteurs (Z1, Z2) disposés à l'intérieur de l'enroulement inducteur et connectés en opposition, l'enroulement de mesure absolue étant constitué soit par ledit enroulement inducteur (Zi), soit par l'un des enroulements récepteurs (Z1, Z2).

7. Dispositif selon la revendication 3, caractérisé en ce qu'il comprend, intercalé entre la sortie de la voie d'analyse absolue (16) et l'entrée (22) de diviseur du circuit diviseur (18), un circuit de réglage du zéro (74) commandé par une source de tension réglable (76).

8. Dispositif selon la revendication 7, caractérisé en ce qu'il comprend en outre un comparateur (80) à deux entrées, la première (80/1) reliée à la sortie du circuit (74) de réglage de zéro et la seconde (80/2) à une source de tension réglable (82), et un relais de protection (78) à une entrée de signal (78/1) reliée à la sortie du circuit diviseur (18) et une entrée de commande (78/2) reliée à la sortie du comparateur (80), ce relais de protection étant ouvert lorsque la tension appliquée à la première entrée (80/1) du comparateur (80) est inférieure à la tension appliquée à la seconde (80/2).

9. Dispositif selon la revendication 3, caractérisé en ce que la voie d'analyse différentielle (14) et la voie d'analyse absolue (16) comprennent toutes deux des circuits (34, 36, 40, 42, 44, 46, 53, 54) aptes à mesurer les deux composantes (X, Y) respectivement en phase et en quadrature de phase par rapport au courant d'excitation.

10. Dispositif selon la revendication 9, caractérisé en ce que lesdits circuits délivrent la composante (X) en phase et comprennent un déphaseur (53) apte à augmenter cette composante (X).

11. Dispositif selon la revendication 3, caractérisé en ce que la voie d'analyse différentielle comprend des circuits (34, 36, 40, 42, 44, 46, 53, 54) aptes à mesurer les deux composantes du signal de mesure différentielle en phase et en quadrature de phase par rapport au courant d'excitation et en ce que la voie d'analyse absolue comprend un amplificateur (60) du signal de mesure absolue, un circuit d'équilibrage (62) de la sonde, un détecteur d'amplitude (64) de signal de mesure absolue et un filtre (66), l'équilibrage de la sonde étant effectué lorsque la sonde est loin de la pièce à contrôler.

**Patentansprüche**

1. Verfahren zur wirbelstromzerstörungsfreien Prüfung, bei dem man eine Sonde verwendet, die gleichzeitig eine differenzielle Messung und eine absolute Messung ermöglicht, wobei diese Sonde für die differenzielle Messung zwei Wicklungen, die eine Impedanz aufweisen, die sich in Gegenwart des zu untersuchenden Teils ändert, und die zu einer differenziellen Meßbrücke gehören und für die absolute Messung eine Wicklung mit einer Impedanz aufweist, die sich in Gegenwart des zu untersuchenden Teils ändert, bei dem diese Sonde mit einem Erregungsstrom einer bestimmten Frequenz versorgt wird und die bei dieser Frequenz an der differenziellen Meßbrücke abgenommene Spannung und die an der Wicklung für die absolute Messung abgenommene Spannung analysiert werden, dadurch gekennzeichnet, daß man, um die Wirkung des Abstandes, welcher die Sonde von dem zu untersuchenden Teil trennt, zu korrigieren, das Ergebnis der differenziellen Messung durch dasjenige der absoluten Messung dividiert, um eine auf die Wirkung des Abstandes korrigierte, differenzielle Messung zu erhalten.

2. Verfahren nach Anspruch 1, dadurch gekennzeichnet, daß das absolute Signal, welches verwendet wird, um das Ergebnis der differenziellen Messung zu teilen, von irgendeiner der zwei Komponenten der an der Wicklung für die absolute Messung abgegriffenen Spannung, die mit dem Erregungsstrom in Phase oder um 90° phasenverschoben ist oder von dem Absolutwert des absoluten Signals oder von der einen oder anderen der zwei genannten Komponenten gebildet wird.

3. Vorrichtung zur wirbelstromzerstörungsfreien Prüfung eines Metallteils zur Durchführung des Verfahrens gemäß Anspruch 1, wobei diese Vorrichtung umfaßt eine Sonde (10), die gleichzeitig eine differenzielle Messung und eine absolute Messung ermöglicht, wobei diese Sonde für die differenzielle Messung zwei Wicklungen (Z1, Z2), die eine sich in Gegenwart des zu prüfenden Teils ändernde Impedanz haben und zu einer differenziellen Meßbrücke (Z1, Z2, R1, R2) gehören, und für die absolute Messung eine Wicklung aufweist, die eine sich in Gegenwart des zu prüfenden Teils ändernde Impedanz aufweist, ferner eine Versorgungsquelle (12) für die Sonde mit einer Spannung einer bestimmten Frequenz, einen von der differenziellen Meßbrücke gespeisten Pfad (14) zur differenziellen Analyse und einen von der Wicklung für die absolute Messung gespeisten Pfad (16) zur absoluten Analyse, wobei die Pfade zur Analyse bei der Frequenz der Versorgungsspannung arbeiten, dadurch gekennzeichnet, daß die Vorrichtung ferner, um die Wirkungen des Abstandes, welcher die Sonde und das zu prüfende Metallteil trennt, zu korrigieren, einen Divisionskreis (18) aufweist, der einerseits zwei Eingänge, von denen der erste (20) für den Dividenden mit dem Ausgang des Pfades (14) für die differenzielle Analyse und der zweite (22) für den Divisor mit dem Ausgang des Pfades (16) für die absolute Analyse verbunden ist, und andererseits einen Ausgang aufweist, welcher ein Signal abgibt, das den Quotienten der an den ersten (20) und den zweiten (22) Eingang angelegten Signale darstellt und das Signal für die differenzielle Messung bildet, welches in Bezug auf die Wirkungen des Abstandes korrigiert ist.

4. Vorrichtung nach Anspruch 3, dadurch gekennzeichnet, daß die Wicklung zur absoluten Messung von einer der Wicklungen ($Z_1$) der differenziellen Meßbrücke gebildet ist.

5. Vorrichtung nach Anspruch 3, dadurch gekennzeichnet, daß die Wicklung zur absoluten Messung von einer zusätzlichen Wicklung gebildet ist.

6. Vorrichtung nach Anspruch 3, dadurch gekennzeichnet, daß die Sonde eine Erregerwicklung (Zi) und zwei Verbraucherwicklungen ($Z_1$, $Z_2$) umfaßt, die im Inneren der Erregerwicklung angeordnet und entgegengesetzt miteinander verbunden sind, wobei die Wicklung zur absoluten Messung entweder von der Erregerwicklung (Zi) oder von einer der Verbraucherwicklungen ($Z_1$, $Z_2$) gebildet ist.

7. Vorrichtung nach Anspruch 3, dadurch gekennzeichnet, daß sie einen zwischen den Ausgang des Pfades (16) für die absolute Analyse und den Eingang (22) für den Divisor des Divisionskreises (18) eingeschobenen Null-Einstellkreis (74) aufweist, der von einer einstellbaren Spannungsquelle (76) gesteuert ist.

8. Vorrichtung nach Anspruch 7, dadurch gekennzeichnet, daß sie ferner einen Komparator (80) mit zwei Eingängen, von denen der erste (80/1) mit dem Ausgang des Null-Einstellkreises (74) und der zweite (80/2) mit einer einstellbaren Spannungsquelle (82) verbunden ist, und ein Schutzrelais (78) mit einem mit dem Ausgang des Divisionskreises (18) verbundenen Signaleingang (78/1) und einem mit dem Ausgang des Komparators (80) verbundenen Steuereingang (78/2) aufweist, wobei das Schutzrelais geöffnet ist, wenn die an den ersten Eingang (80/1) des Komparators (80) angelegte Spannung niedriger als die an den zweiten (80/2) angelegte Spannung ist.

9. Vorrichtung nach Anspruch 3, dadurch gekennzeichnet, daß der Pfad (14) für die differenzielle Analyse und der Pfad (16) für die absolute Analyse beide Schaltkreise (34, 36, 40, 42, 44, 46, 53, 54) umfassen, mit denen die zwei Komponenten (X, Y) in Bezug auf den Erregungsstrom in Phase bzw. um 90° phasenverschoben meßbar sind.

10. Vorrichtung nach Anspruch 9, dadurch gekennzeichnet, daß die genannten Schaltkreise die Komponente (X) in Phase liefern und einen ruhenden Phasenschieber (53) umfassen, mit dem diese Komponente (X) erhöht werden kann.

11. Vorrichtung nach Anspruch 3, dadurch gekennzeichnet, daß der Pfad zur differenziellen Analyse Schaltkreise (34, 36, 40, 42, 44, 46, 53, 54) umfaßt, mit denen die zwei Komponenten des differenziellen Meßsignals in Phase oder um 90° phasenverschoben in Bezug auf den Erregungsstrom gemessen werden können, und daß der Pfad für die absolute Analyse einen Verstärker (60) für das absolute Meßsignal, eine Kompensationsschaltung (62) für die Sonde, einen Amplitudendetektor (64) für das absolute Meßsignal und ein Filter (66) umfaßt, wobei der Ausgleich der Sonde durchgeführt wird, wenn die Sonde von dem zu untersuchenden Teil entfernt wird.

## Claims

1. Process for the non-destructive testing of a metallic article by eddy currents, using a probe capable of simultaneously producing a differential measurement and an absolute measurement, said probe comprising, for the differential measurement, two windings having an impedance which varies in the presence of the article to be tested and belonging to a differential measuring bridge, and, for the absolute measurement, a winding having an impedance which varies in the presence of the article to be tested, said probe being supplied with an excitation current of predetermined frequency, the potential measured on the differential measurement bridge and the potential measured on the absolute measurement winding being analyzed at said frequency, said process being characterized in that, to correct the effects of lift off from separation of the probe from the article to be tested, the result obtained by differential measurement is divided by that obtained by absolute measurement to provide a differential measurement corrected for lift off effects.

2. Process according to Claim 1, characterized in that the absolute signal employed for dividing the result of differential measurement comprises one of the two components of potential measured on the absolute measurement winding, in phase or in phase quadrature with respect to the excitation current, or by modulation of said absolute signal, or by both of said components.

3. Apparatus for non-destructive testing of a metallic article by eddy currents, for carrying out the process according to Claim 1, said apparatus comprising a probe (10) capable of simultaneous differential measurement and absolute measurement, said probe comprising, for differential measurement, two windings (Z1, Z2) having an impedance which varies in the presence of the article to be tested and belonging to a differential measurement bridge (Z1, Z2, R1, R2) and, for the absolute measurement, a winding having an impedance which varies in the presence of an article to be tested, said apparatus additionally comprising a source (12) for supplying the probe with a potential at a predetermined frequency, a differential analysis circuit (14) supplied by the differential measurement bridge, and an absolute analysis circuit (16) supplied by the absolute measurement winding, said analysis circuits working at said frequency of supply potential, said apparatus being characterized in that it additionally comprises, for correcting the lift off effects separating the probe from the metal piece to be tested, a divider circuit (18) comprising, on the one hand, two inputs, the first (20) for the numerator connected to the output of the differential analysis circuit (14), the second (22) for the divisor, connected to the output of the absolute analysis circuit (16) and, on the other hand, one output which delivers a signal representing the quotion of the signals delivered by said first (20) and second (22) inputs and constituting the differential measurement signal corrected for lift off effects.

4. Apparatus according to Claim 3, characterized in that the absolute measurement winding comprises one of the windings ($Z_1$) of the differ-ential measurement bridge.

5. Apparatus according to Claim 3, characterized in that the absolute measurement winding comprises a supplementary winding.

6. Apparatus according to Claim 3, characterized in that the probe comprises an inductor winding (Zi) and two receiver windings ($Z_1$, $Z_2$) located within the inductor winding and connected in opposition, the absolute measurement winding comprising either the said inductor winding (Zi) or one of the receiver windings ($Z_1$, $Z_2$).

7. Apparatus according to Claim 3, characterized in that it comprises a zero control circuit (74) operated by a controllable potential source (76) between the output of the absolute analysis circuit (16) and the input (22) of the divider circuit (18).

8. Apparatus according to Claim 7, characterized in that it additionally comprises a comparator (80) having two inputs, the first (80/1) being connected to the output of the zero control circuit (74) and the second (80/2) connected to a controllable potential source (82), and a protection relay (78) for a signal input (78/1) connected to the output of the divider circuit (18) and a control input (78/2) connected to the output of comparator (80), said protection relay being open when the potential supplied to the first input (80/1) of the comparator (80) is less than the potential supplied to the second input (80/2).

9. Apparatus according to Claim 3, characterized in that the differential analysis circuit (14) and the absolute analysis circuit (16) both comprise circuits (34, 36, 40, 42, 44, 46, 53, 54) adapted to measure the two components (X, Y) respectively in phase and in phase quadrature with respect to the excitation current.

10. Apparatus according to Claim 9, characterized in that said circuits supply the component (X) in phase and comprise a phase converter (53) adapted to increase said component (X).

11. Apparatus according to Claim 3, characterized, in that the differential analysis circuit comprises circuits (34, 36, 40, 42, 44, 46, 53, 54) adapted to measure the two components of the differential measurement signal which are in phase and in phase quadrature with respect to the excitation current, and in that the absolute analysis

**0 061 956**

circuit comprises an amplifier (60) for the absolute measurement signal, an equilibration circuit (62) for the probe, an amplitude detector (64) for the absolute measurement signal, and a filter (66), equilibration of the probe being conducted when the probe is separated from the article to be tested.

FIG.1

FIG. 2

FIG. 6

FIG. 3

FIG. 4

# FIG. 5

# FIG. 7

$E_1$

$E_2$

$E_3$

$E_4$

$E_5$

a

b

c

0

0

FIG. 8